# EUROPEAN PATENT APPLICATION

(11) **EP 2 361 877 A1**
(43) Date of publication of application: **31.08.2011**
(21) Application number: 09819010.1
(22) Date of filing: 09.10.2009
(51) Int. Cl.: C01B 3/38, H01M 8/00, H01M 8/04, H01M 8/06

(54) **HYDROGEN GENERATOR, FUEL CELL SYSTEM, AND METHOD OF OPERATING HYDROGEN GENERATOR**

(30) Priority: 09.10.2008 JP 2008262517
(71) Applicant: Panasonic Corporation, Kadoma-shi Osaka 571-8501 (JP)
(72) Inventor: UKAI, Kunihiro, Osaka-shi Osaka 540-6207 (JP); TAGUCHI, Kiyoshi, Osaka-shi Osaka 540-6207 (JP); TAMURA, Yoshio, Osaka-shi Osaka 540-6207 (JP); FUJIHARA, Seiji, Osaka-shi Osaka 540-6207 (JP); ASO, Tomonori, Osaka-shi Osaka 540-6207 (JP)
(74) Representative: Leinweber & Zimmermann
(86) International application number: PCT/JP2009/005296
(87) International publication number: WO 2010/041471

(57) **Abstract**

A hydrogen generator (100) of the present invention includes: a raw material supplying device (4) configured to supply a raw material containing a sulfur constituent; a hydrogen supplying device (7) configured to generate hydrogen by electrolysis of water; a hydro-desulfurizer (5) configured to remove the sulfur constituent of the raw material by using the hydrogen generated by the hydrogen supplying device (7), the raw material being supplied from the raw material supplying device (4); and a reformer (1) configured to generate a hydrogen-containing gas by a reforming reaction of the raw material from which the sulfur constituent is removed by the hydro-desulfurizer (5).

## Description

### Technical Field

The present invention relates to a hydrogen generator configured to generate a hydrogen-containing gas from, for example, a fossil material, a fuel cell system, and a method for operating the hydrogen generator.

### Background Art

A fuel cell which is small in size but capable of generating electric power with high efficiency has been developed as an electric power generating system of a distributed energy supply source. However, means for supplying a hydrogen gas necessary as a fuel for electric power generation is not developed as an existing infrastructure. Therefore, a hydrogen generator configured to generate a hydrogen-containing gas by utilizing a raw material, such as a city gas or a propane gas, supplied from the existing infrastructure is attached to the electric power generating system

The city gas or propane gas supplied from the existing infrastructure usually contains an odorant component at a volume concentration of about several ppm. A typical example of the odorant component is a sulfur compound, such as methyl mercaptan or dimethyl sulfide. This is to detect gas leakage from, for example, a pipe of an infrastructure line. However, the sulfur compound contained as the odorant component is a poisoning component of a catalyst used in the hydrogen generator. Therefore, to suppress the influence of sulfur poisoning of the catalyst, the sulfur compound needs to be removed from the raw material before supplying the raw material to the hydrogen generator.

Here, PTL 1 proposes that the sulfur compound in the raw material is adsorbed and removed by an absorbent desulfurizer using a zeolite-based adsorptive remover. Moreover, PTL 2 describes that the sulfur compound in the raw material is removed by hydrodesulfurization by using a hydro-desulfurizer which has a larger adsorption capacity than the absorbent desulfurizer and can be reduced in size and maintenance-free. Further, PTL 3 describes that a hydrogen reservoir incorporating a hydrogen absorbing alloy is provided, the hydrogen stored during a normal operation is discharged at the time of start-up to be added to a hydrocarbon fuel, and the sulfur compound is removed by hydrodesulfurization.

### Citation List

### Patent Literature

PTL 1: Japanese Laid-Open Patent Application Publication No. 2004-228016
PTL 2: Japanese Laid-Open Patent Application Publication No. 2005-302684
PTL 3: Japanese Laid-Open Patent Application Publication No. 7-192746

### Summary of Invention

### Technical Problem

As in the hydrogen generator described in PTL 2, the hydrogen-containing gas generated in the hydrogen generator is recycled in the hydro-desulfurizer as the hydrogen added to the raw material. In this case, at the time of the start-up of the hydrogen generator, the hydrogen is not added to the raw material until the hydrogen-containing gas generated in the hydrogen generator flows through a recycle passage to reach a raw material passage. Therefore, the sulfur constituent is not removed by the hydro-desulfurizer, but the raw material is supplied to the hydrogen generator. To solve this problem, the hydrogen generator described in PTL 3 is configured to supply the hydrogen to the raw material from the hydrogen reservoir including the hydrogen absorbing alloy. However, the hydrogen stored in the hydrogen reservoir is the hydrogen supplied from the hydrogen generator to the hydrogen reservoir. To be specific, the hydrogen reservoir stores not only the hydrogen but also carbon monoxide and carbon dioxide contained in the hydrogen-containing gas discharged from the hydrogen generator. If the gas containing not only the hydrogen but also the carbon monoxide and the carbon dioxide is supplied to the raw material and the hydro-desulfurizer, not only a reaction by which the sulfur compound becomes hydrogen sulfide but also a methanation reaction of carbon monoxide or carbon dioxide proceed, and this methanation reaction may cause thermorunaway of the hydro-desulfurizer.

The present invention was made in light of the above circumstances, and an object of the present invention is to provide a hydrogen generator including a hydro-desulfurizer and capable of performing desulfurization more stably than a conventional hydrogen generator, a method for operating the hydrogen generator, and a fuel cell system including the hydrogen generator.

### Solution to Problem

A hydrogen generator of the present invention includes: a raw material supplying device configured to supply a raw material containing a sulfur constituent; a hydrogen supplying device configured to carry out electrolysis of water to generate hydrogen; a hydro-desulfurizer configured to remove the sulfur constituent of the raw material by using the hydrogen generated by the hydrogen supplying device, the raw material being supplied from the raw material supplying device; and a reformer configured to generate a hydrogen-containing gas by a reforming reaction of the raw material from which the sulfur constituent is removed by the hydro-desulfurizer.

In a preferred mode, the hydrogen generator may further include a recycle passage through which a part of the hydrogen-containing gas generated in the reformer flows, and a part of the hydrogen-containing gas flowing through the recycle passage may be supplied to the hydro-desulfurizer.

A method for operating a hydrogen generator of the present invention is a method for operating a hydrogen generator including: a raw material supplying device configured to supply a raw material containing a sulfur constituent; a hydrogen supplying device configured to carry out electrolysis of water to generate hydrogen; a hydro-desulfurizer configured to remove the sulfur constituent of the raw material by using the hydrogen generated by the hydrogen supplying device, the raw material being supplied from the raw material supplying device; and a reformer configured to generate a hydrogen-containing gas by a reforming reaction of the raw material from which the sulfur constituent is removed by the hydro-desulfurizer, wherein during at least a start-up operation, the hydro-desulfurizer desulfurizes the raw material by using the hydrogen supplied from the hydrogen supplying device.

In the other preferred mode, the hydrogen generator may further include a recycle passage through which a part of the hydrogen-containing gas generated in the reformer flows and is configured such that a part of the hydrogen-containing gas flowing through the recycle passage is supplied to the hydro-desulfurizer, and during the start-up operation, the hydro-desulfurizer may desulfurize the raw material by using the hydrogen supplied from the hydrogen supplying device, and after the start-up operation, the hydro-desulfurizer may desulfurize the raw material by using a part of the hydrogen-containing gas supplied through the recycle passage.

The above object, other objects, features and advantages of the present invention will be made clear by the following detailed explanation of preferred embodiments with reference to the attached drawings.

### Advantageous Effects of Invention

In accordance with the present invention, as compared to a conventional hydrogen generator, the hydrogen necessary for hydrodesulfurization can be stably supplied during the start-up of the hydrogen generator, and the possibility of the thermorunaway of the hydro-desulfurizer by the methanation reaction of carbon monoxide or carbon dioxide can be reduced.

### Brief Description of Drawings

[Fig. 1] Fig. 1 is a schematic configuration diagram showing the configuration of a hydrogen generator according to Embodiment 1 of the present invention.
[Fig. 2] Fig. 2 is a schematic diagram showing the configuration of a hydrogen supplying device of Fig. 1.
[Fig. 3] Fig. 3 is a schematic configuration diagram showing the configuration of the hydrogen generator according to Modification Example 1 of Embodiment 1.
[Fig. 4] Fig. 4 is a schematic diagram showing the configuration of the hydrogen supplying device of Fig. 3.
[Fig. 5] Fig. 5 is a schematic configuration diagram showing the configuration of the hydrogen generator according to Modification Example 2 of Embodiment 1.
[Fig. 6] Fig. 6 is a schematic configuration diagram showing the configuration of the hydrogen generator according to Modification Example 3 of Embodiment 1.
[Fig. 7] Fig. 7 is a schematic configuration diagram showing the configuration of the hydrogen generator according to Embodiment 2 of the present invention.
[Fig. 8] Fig. 8 is a schematic configuration diagram showing the configuration of a fuel cell system according to Embodiment 3 of the present invention.
[Fig. 9] Fig. 9 is a schematic configuration diagram showing the configuration of the fuel cell system according to Embodiment 4 of the present invention.

### Description of Embodiments

Hereinafter, embodiments of the present invention will be specifically explained in reference to the drawings.

### Embodiment 1

### Configuration of Hydrogen Generator 100

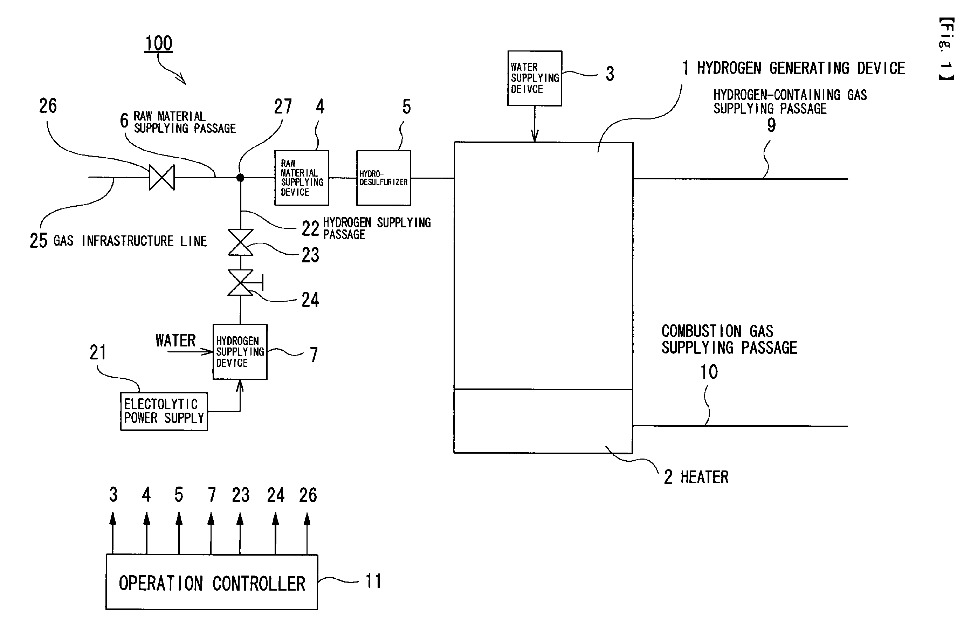

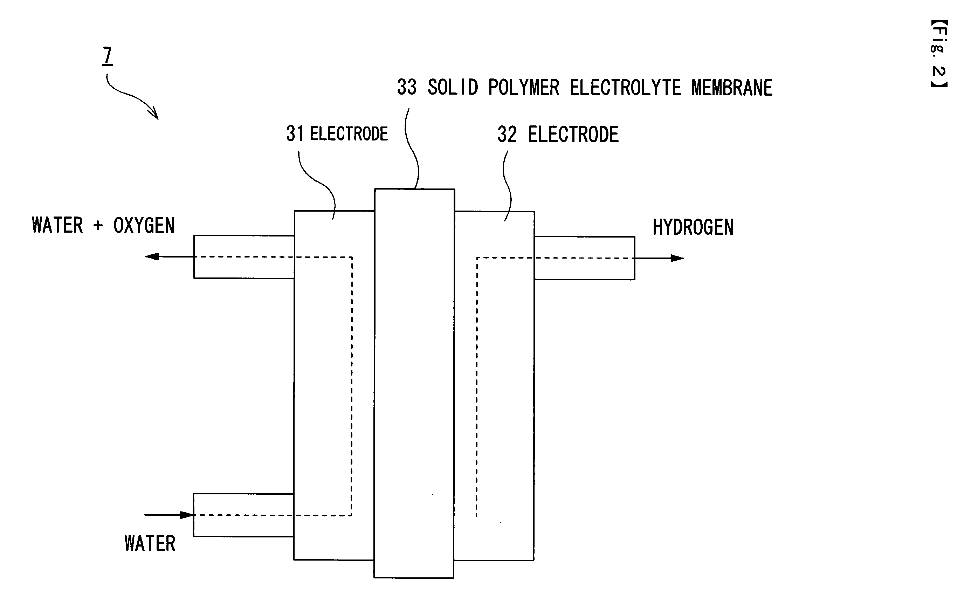

Fig. 1 is a schematic configuration diagram showing the configuration of a hydrogen generator 100 according to Embodiment 1 of the present invention. Fig. 2 is a schematic diagram showing the configuration of a hydrogen supplying device of Fig. 1.

As shown in Fig. 1, the hydrogen generator 100 includes a hydrogen generating device 1, a hydro-desulfurizer 5, a raw material supplying device 4, a water supplying device 3, and a hydrogen supplying device 4. The hydrogen generating device 1 carries out a reforming reaction between a raw material and steam to generate a hydrogen-containing gas. The hydro-desulfurizer 5 removes a sulfur constituent contained in the raw material. The raw material supplying device 4 supplies the raw material to the hydrogen generating device 1 and controls a flow rate (raw material flow rate) of the raw material. The water supplying device 3 supplies water to the hydrogen generating device 1. The hydrogen supplying device 4 supplies hydrogen to the hydro-desulfurizer 5.

The hydrogen generating device 1 includes a reformer having a reforming catalyst (such as a Ru-based catalyst). The reformer generates the hydrogen-containing gas by the reforming reaction between the raw material supplied from the hydro-desulfurizer 5 and the steam obtained by evaporating the water supplied from the water supplying device 3. Since the configuration of the reformer is the same as a common configuration, a detailed explanation thereof is omitted.

Moreover, the hydrogen generating device 1 includes a heater 2 configured to supply reaction heat necessary for the reforming reaction in the reformer. The heater 2 includes a combustor (such as a burner) configured to combust a combustion gas that is a heat source, an ignitor that is an ignition source of the combustor, a flame rod configured to detect a combustion state of the combustor, and a combustion fan configured to supply combustion air to the combustor (details are not shown).

Further, for example, a hydrogen-containing gas supplying passage 9 through which the hydrogen-containing gas is supplied to an external device, such as a fuel cell, a combustion gas supplying passage 10 through which the combustion gas combusted in the heater 2 is supplied, and a raw material supplying passage 6 through which the raw material is supplied to the hydrogen generating device 1 are connected to the hydrogen generating device 1. Utilized as the combustion gas are the raw material, the hydrogen-containing gas generated by the hydrogen generator 1, the hydrogen-containing gas unconsumed in the external device, and the like.

Moreover, the water supplying device 3 in Embodiment 1 includes a pump having a flow rate adjusting function.

For example, the raw material supplying passage 6 is connected via a main cock 26 to a gas infrastructure line 25 of the city gas as a supply source of the raw material. The raw material supplying device 4 and the hydro-desulfurizer 5 are disposed on the raw material supplying passage 6 in this order from an upstream side. With this, the raw material is supplied from the raw material supplying device 4 through the hydro-desulfurizer 5 to the hydrogen generating device 1. The raw material supplying device 4 includes a booster pump and can adjust the flow rate of the raw material by controlling a current pulse, input power, or the like input to the booster pump. In addition to the booster pump, the raw material supplying device may further include a needle valve located downstream of the booster pump to finely control the amount of raw material supplied. Moreover, in a case where a supply gas pressure of the gas infrastructure line 6 is high, the booster pump for increasing the gas pressure may not be provided, and the raw material supplying device 4 may be constituted by only the needle valve (flow rate control valve). The order of arrangement of the hydro-desulfurizer 5 and the raw material supplying device 4 may be suitably determined in consideration of the characteristics of the configurations thereof

The hydro-desulfurizer 5 includes a cobalt-molybdenum-based catalyst. The hydro-desulfurizer 5 causes the reaction between the sulfur compound and the hydrogen to generate hydrogen sulfide. Next, the hydro-desulfurizer 5 causes the reaction between the hydrogen sulfide and zinc oxide (reaction remover) to generate zinc sulfide. Thus, the hydro-desulfurizer 5 removes the sulfur constituent, that is, performs hydrodesulfurization. The hydro-desulfurizer 5 is not limited to the above configuration. For example, a copper-zinc-based hydrodesulfurization catalyst (which also serves as the reaction remover) may be used (details are not shown). The hydro-desulfurizer 5 is heated by a heat source, not shown. An electric heater, a reactor in the hydrogen generator 1, a gas flowing through the hydrogen generator 1, and the like can be used as the heat source.

A hydrogen supplying device 7 carries out electrolysis of water to generate hydrogen. The hydrogen generated in the hydrogen supplying device 7 is supplied through a hydrogen supplying passage 22 to the raw material supplying passage 6. A downstream end of the hydrogen supplying passage 22 is connected to the raw material supplying passage 6 (connecting point 27) located upstream of the raw material supplying device 4. With this, the hydrogen generated in the hydrogen supplying device 7 is supplied so as to be added to the raw material supplied to the raw material supplying device 4. In this case, the hydrogen having a low steam dew point can be supplied. In a case where the steam is small in amount, it is possible to improve the reactivity between the hydrogen sulfide and the reaction remover. Therefore, a sulfur removing performance of the hydro-desulfurizer 5 can improve. Further, a flow rate control valve 24 and an on-off valve 23 are disposed on the hydrogen supplying passage 22 in this order from an upstream side. In accordance with this configuration, by suitably setting the flow rate of the hydrogen by the flow rate control valve 24, a ratio of the hydrogen, added to the raw material, to the raw material flowing through the raw material supplying passage 6 (hereinafter may be referred to as an "addition ratio") can be maintained substantially constant. Instead of the flow rate control valve 24, a fixed orifice may be provided. Without providing the fixed orifice, the above addition ratio may be realized by appropriately designing a ratio of a pipe diameter of the raw material supplying passage 6 and a pipe diameter of the hydrogen supplying passage 22. To secure the addition ratio of the hydrogen to the raw material, it is preferable that the amount of hydrogen generated in the hydrogen supplying device 7 be controlled by an operation controller 11 in accordance with the control of the amount of raw material supplied to the raw material supplying device 4. Moreover, to more stably supply the hydrogen to the raw material, a buffer (not shown) configured to temporarily store the hydrogen may be provided upstream of the on-off valve 24. The on-off valve 23 open and close by the operation controller 11 in accordance with the supply or supply stop of the hydrogen from the hydrogen supplying device 7. The flow rate control valve 24 may be omitted.

Moreover, as shown in Fig. 2, the hydrogen supplying device 7 includes a pair of electrodes 31 and 32 using, for example, platinum black and a solid polymer membrane 33 sandwiched between the electrodes 31 and 32. An electrolytic power supply 21 applies a voltage to a pair of electrodes 31 and 32 using the solid polymer membrane 33 as an electrolyte membrane, and the hydrogen supplying device 7 carries out the electrolysis of water. Specifically, for example, channels are respectively formed on main surfaces of the pair of electrodes 31 and 32, the main surfaces contacting the solid polymer membrane 33. The water supplied from outside flows into the channel of the electrode 31. While the water flows through the channel of the electrode 31, the electrolysis of the water is carried out, and oxygen is generated in the channel of the electrode 31. The oxygen is discharged (flows out) to the outside through the channel of the electrode 31 together with the water. In contrast, the hydrogen (hydrogen gas) is generated in the channel of the electrode 32 by the electrolysis and is discharged (flows out) to the outside through the channel of the electrode 32.

The hydrogen may be generated by applying a voltage to a positive electrode and negative electrode of a solid polymer fuel cell from an external power supply. Moreover, to continuously generate the hydrogen, the supply of the water is required. For example, a water supplying passage of the water supplying device 3 may be branched, and the water may be supplied to the hydrogen supplying device 7 (details are not shown).

The electrolytic power supply 21 is constituted by, for example, a storage battery. Of course, an external power supply, such as a commercial power supply (system power supply), located outside the hydrogen generator 100 may be used as the electrolytic power supply 21.

Moreover, the hydrogen generator 100 includes the operation controller 11 configured to control the operations. The operation controller 11 controls the amount of raw material supplied from the raw material supplying device 4 to the hydrogen generating device 1, the amount of water supplied from the water supplying device 3 to the hydrogen generating device 1, the operations of the hydrogen supplying device 7, the open and close of the on-off valve 23, the flow rate adjustment of the flow rate control valve 24, the open and close of the main cock 26, and the like. The operation controller 11 is constituted by, for example, a microcomputer. A semiconductor memory, a CPU, and the like of the microcomputer store, for example, operation information, such as an operation sequence of the hydrogen generator 100 and calculate an appropriate operating condition suitable for situations. Moreover, the operation controller 11 can give operating conditions necessary for the operations to the components, such as the water supplying device 3, the raw material supplying device 4, and the hydrogen supplying device 7.

In Embodiment 1, used as the raw material is a city gas using a gas, such as a natural gas, containing methane as a major component. However, the raw material may be a raw material containing an organic compound, such as hydrocarbon, composed of at least carbon and hydrogen. LPG, kerosene, or the like may be used. Moreover, a gas infrastructure, such as a city gas, a gas bomb, such as a propane gas, or the like may be adopted as means for supplying the raw material.

### Operations of Hydrogen Generator 100

Next, the operations of the hydrogen generator 100 will be explained. The operations of the hydrogen generator 100 are executed by the control of the operation controller 11.

In the case of starting up the hydrogen generator 100 from a stop state, the combustion gas supplying passage 10 is supplied to a combustor 2 and ignited in the combustor 2 to start heating. Here, a start-up operation of the hydrogen generator 100 denotes an operation carried out in a period from when a start-up signal is output from the operation controller 11 in the hydrogen generator 100 until when the hydrogen generator 100 starts stably supplying a hydrogen-containing gas containing hydrogen at a high concentration to the outside.

Next, the raw material supplying device 4 and the water supplying device 3 operate to supply the raw material and the water to the hydrogen generating device 1, and the reforming reaction between the water and the raw material starts. In Embodiment 1, a city gas (13A) containing methane as a major component is used as the raw material. The amount of water supplied from the water supplying device 3 is controlled such that the steam is about 2.5 to 3 moles when the number of carbon atoms in an average molecular formula of the city gas is 1 mole (the steam carbon ratio (S/C) is about 2.5 to 3).

At the same time as the start of the supply of the raw material, the hydrogen supplying device 7 operates to generate the hydrogen. The hydrogen is added to the raw material, and the mixture is supplied to the hydro-desulfurizer 5. At this time, since the hydro-desulfurizer 5 generates hydrogen sulfide by the reaction between the sulfur compound and the hydrogen, it is heated to 200 to 250°C by a heat source, not shown. Moreover, the hydro-desulfurizer 5 causes the generated hydrogen sulfide to react with zinc oxide. Thus, the hydrogen sulfide is removed. The hydrogen supplying device 7 operates such that the concentration (addition ratio) of the hydrogen in the raw material becomes 1 to 2%. In this case, the amount of oxygen generated is about 0.5 to 1% with respect to the amount of raw material.

In the hydrogen generating device 1, the reformer generates the hydrogen-containing gas by the steam-reforming reaction, and the hydrogen-containing gas is supplied through the hydrogen-containing gas supplying passage 9 to the external device.

When stopping the operation of the hydrogen generator 100, the supply of the raw material and water to the hydrogen generating device 1 stops, and the temperature of the catalyst layer of the hydrogen generating device 1 (reformer) is reduced. After the temperature of each catalyst layer is reduced to a set temperature, the supply of the raw material is restarted to replace the hydrogen-containing gas remaining in the gas passage of the hydrogen generator 1 with the raw material. Here, in this replacement operation by the raw material in the hydrogen generating device 1, the hydrogen supplying device 7 also operates to add the hydrogen to the raw material.

Moreover, in the hydrogen generator 100 of the present embodiment, the hydrogen is supplied from the hydrogen supplying device 7 during the operation, more specifically, in the period in which the raw material is being supplied to the hydrogen generating device 1. However, the present embodiment is not limited to this. The hydrogen may be supplied from the hydrogen supplying device 7 during at least the start-up operation, and the hydrogen may be supplied from the other device in the other period in which the raw material is being supplied.

As described above, the hydrogen generator 100 of Embodiment 1 is configured such that the hydrogen supplied to the hydro-desulfurizer 5 is supplied from the hydrogen supplying device 7 configured to generate the hydrogen by the electrolysis of the water. Significant features in the case of generating the hydrogen by the electrolysis of the water are that the hydrogen can be generated immediately and the amount of hydrogen generated can be easily controlled by the amount of current. With this, the hydrogen can be stably supplied to the hydro-desulfurizer 5 especially in a period immediately after the start-up, that is, a period in which the reforming reaction does not proceed and in a period of the start-up, that is, a period in which the temperature of the catalyst layer of the reformer is unstable. As a result, the hydro-desulfurizer 5 can effectively remove the sulfur compound. Therefore, a poisoned level of the catalyst of the hydrogen generator 100 by the sulfur can be lowered, and the hydrogen generator can operate for a long period of time.

Moreover, the hydrogen-containing gas having a lower concentration of carbon monoxide or carbon dioxide than the hydrogen-containing gas generated in the hydrogen generator 100 to be added to the raw material is supplied from the hydrogen supplying device 7 in the hydrogen generator of Embodiment 1. Therefore, the possibility of the thermorunaway of the hydro-desulfurizer 5 by the methanation reaction is reduced.

Next, Modification Example of Embodiment 1 will be explained.

### Modification Example 1

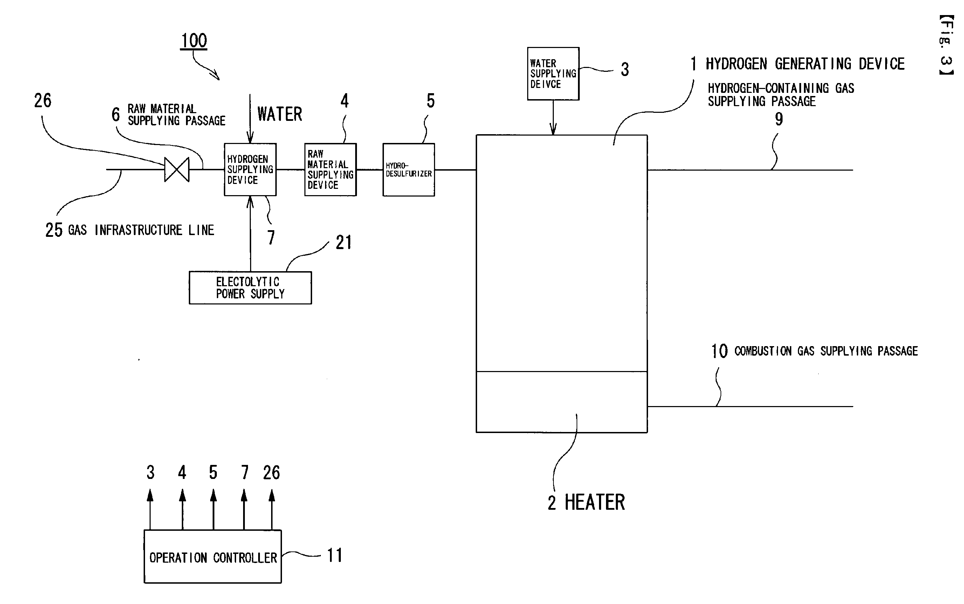

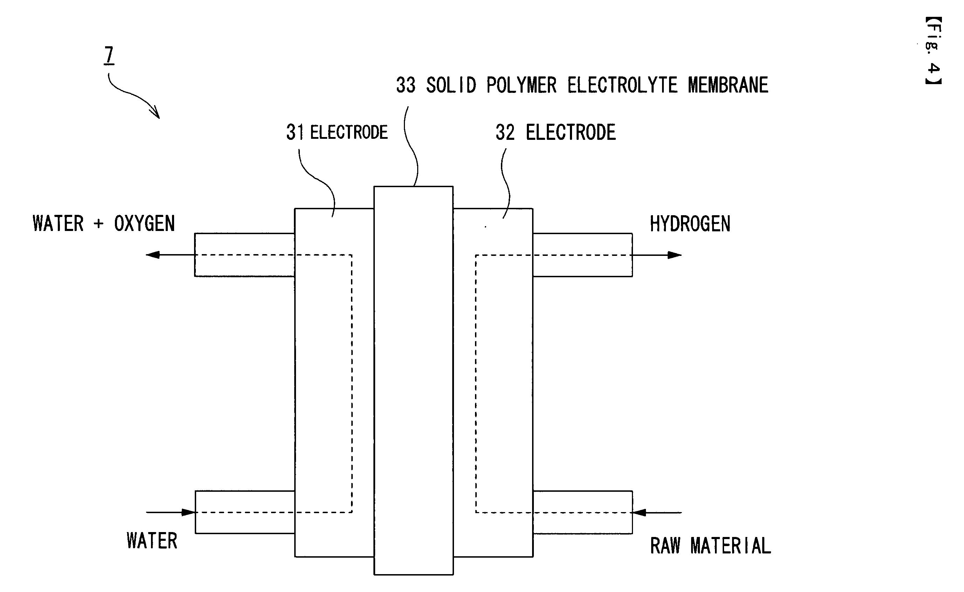

Fig. 3 is a schematic configuration diagram showing the configuration of the hydrogen generator 100 according to Modification Example 1 of Embodiment 1. Fig. 4 is a schematic diagram showing the configuration of the hydrogen supplying device of Fig. 3.

As shown in Fig. 3, in Modification Example 1, the hydrogen supplying device 7 is disposed on the raw material supplying passage 6 located upstream of the raw material supplying device 4. Specifically, as shown in Fig. 4, the hydrogen supplying device 7 is configured such that: the raw material containing the sulfur constituent is supplied through the raw material supplying passage 6 to the channel of the electrode 32; in the process of the electrolysis of the water flowing through the channel of the electrode 31, the hydrogen generated by the electrolysis is added to the raw material in the channel of the electrode 32; and the raw material to which the hydrogen is added is discharged from the hydrogen supplying device 7. Then, the raw material to which the hydrogen is added is supplied to the hydro-desulfurizer 5.

In accordance with this configuration, as compared to a case where the hydrogen supplying device 7 is provided as shown in Fig. 1, the steam dew point may become higher, and the sulfur removing performance may slightly deteriorate. However, the hydrogen can be smoothly supplied to the raw material.

### Modification Example 2

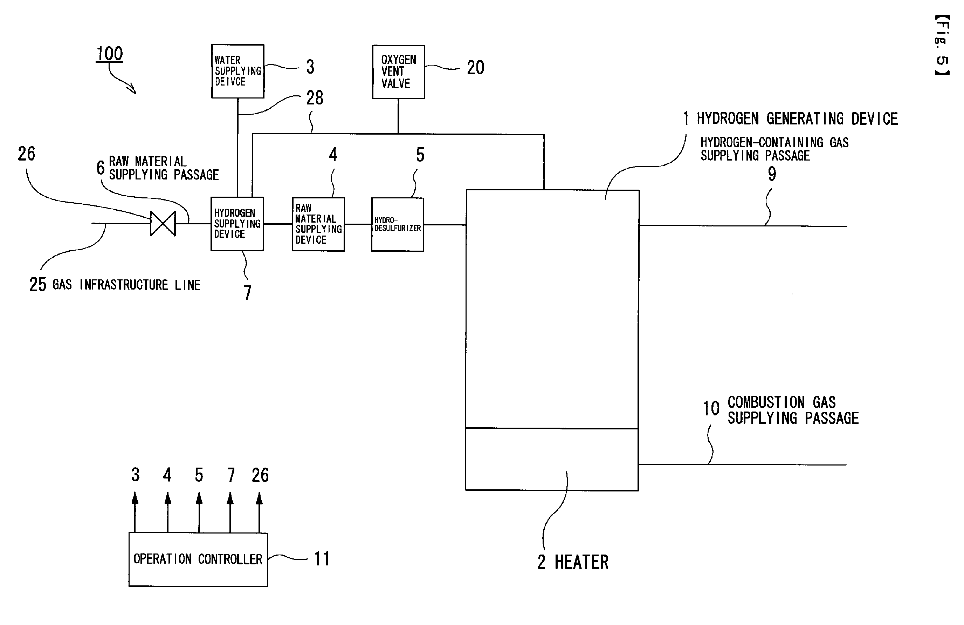

Fig. 5 is a schematic configuration diagram showing the configuration of the hydrogen generator 100 according to Modification Example 2 of Embodiment 1.

As shown in Fig. 5, in addition to the configuration of the hydrogen generator 100 of Modification Example 1, the hydrogen generator 100 of Modification Example 2 is further configured such that the entire amount of water in the water supplying device 3 is supplied to the channel (see Fig. 4) of the electrode 31 of the hydrogen supplying device 7, the hydrogen supplying device 7 carries out the electrolysis of the supplied water, and the water subjected to the electrolysis is supplied to the hydrogen generating device 1 as the water used for the reforming reaction. Reference sign 28 denotes a water supplying passage extending from the water supplying device 3 to the hydrogen generating device 1.

In this case, the water unconsumed for the electrolysis in the hydrogen supplying device 7 contains an oxygen gas. In the present modification example, an oxygen vent valve 20 is disposed on the water supplying passage 28 extending from the hydrogen supplying device 7 to the hydrogen generating device 1, and the oxygen gas is separated by the oxygen vent valve 20. The oxygen vent valve 20 may be omitted, and the water containing the oxygen may be supplied from the hydrogen supplying device 7 to the hydrogen generating device 1. If the catalyst used in the reformer is oxidized, the catalytic activity thereof may deteriorate. However, the amount of oxygen contained is about 0.5 to 1% with respect to the amount of raw material. Therefore, this is not a big problem in a state where the hydrogen-containing gas is generated in the reformer. In contrast, since the oxygen is contained, a part of the raw material or the hydrogen combusts by the oxygen on the upstream side of the reforming catalyst. Therefore, an effect of improving the temperature state of the upstream side of the Ru catalyst of the reformer can be obtained.

### Modification Example 3

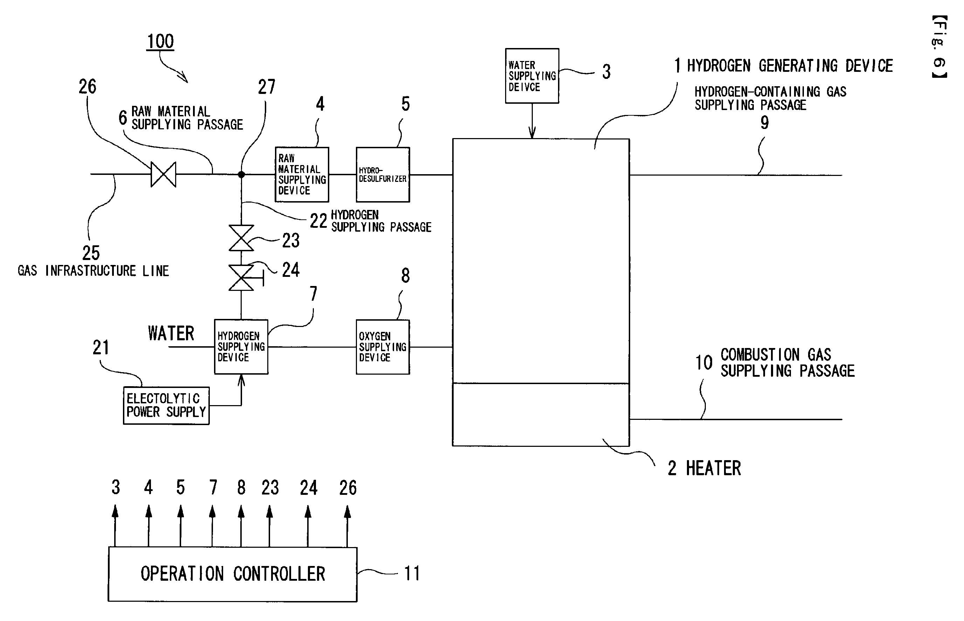

Fig. 6 is a schematic configuration diagram showing the configuration of the hydrogen generator 100 according to Modification Example 3 of Embodiment 1.

As shown in Fig. 6, in addition to the configuration of the hydrogen generator 100 shown in Fig. 1, the hydrogen generator 100 of Modification Example 3 is further configured such that the hydrogen generating device 1 includes a CO oxidizer (not shown) configured to reduce the carbon monoxide in the hydrogen-containing gas generated by the reformer. Further, the hydrogen generator 100 further includes an oxygen supplying device 8 configured to supply to the CO oxidizer the oxygen generated by the electrolysis in the hydrogen supplying device 7. The oxygen supplying device 8 includes a gas-liquid separator (not shown) and a blower (not shown). The gas-liquid separator is configured to separate the oxygen, generated by the electrolysis of the water, from the water discharged from the hydrogen supplying device 7 and subjected to the electrolysis. The gas-liquid separator is open to the atmosphere, and the oxygen separated by the gas-liquid separator is supplied to the CO oxidizer by the blower together with the air.

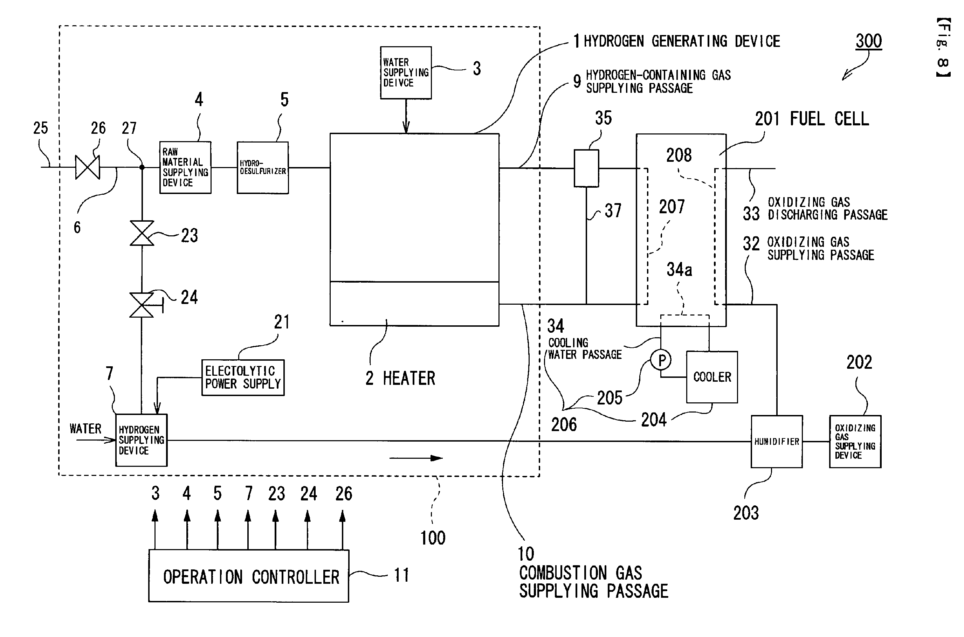

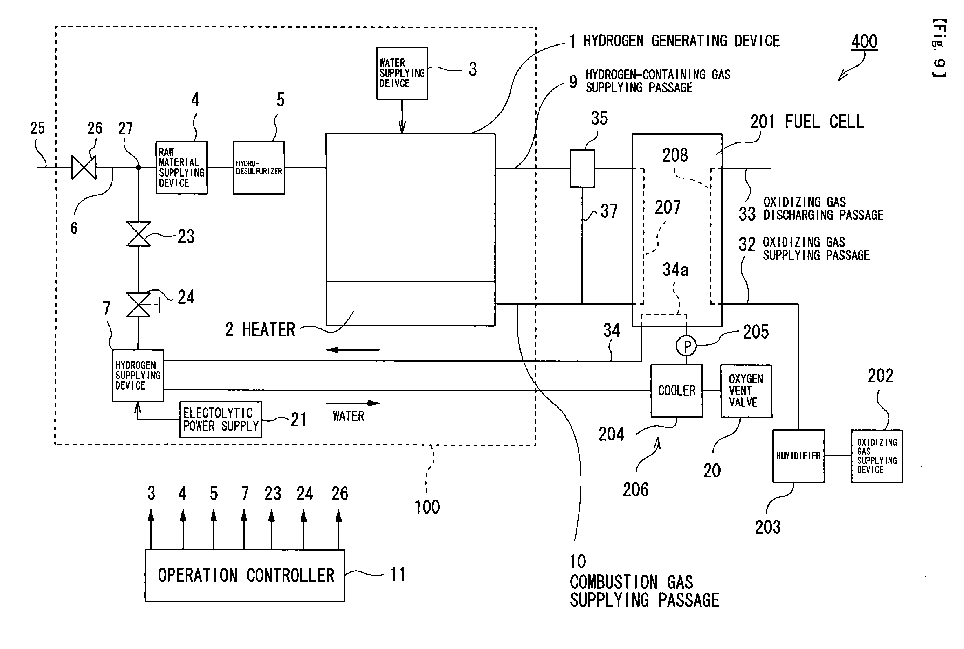

For example, in a case where the hydrogen-containing gas is supplied to the solid polymer fuel cell that is the external device (see Embodiment 3 (Fig. 8) and Embodiment 4 (Fig. 9)), the CO oxidizer reduces the concentration of the carbon monoxide in the hydrogen-containing gas up to about 20 ppm or lower at a volume concentration (dry gas base). Moreover, depending on the concentration of the carbon monoxide required by the external device, the hydrogen generating device 1 may include a shift converter between the reformer and the CO oxidizer. The shift converter includes a Cu-Zn-based catalyst and causes a shift reaction between the carbon monoxide in the hydrogen-containing gas generated by the reformer and the steam to reduce the concentration of the carbon monoxide in the hydrogen-containing gas. Since the configurations of the shift converter and CO oxidizer are the same as common configurations, detailed explanations thereof are omitted.

In accordance with the present modification example, the oxygen generated in the hydrogen supplying device 7 can be supplied to the oxygen supplying device 8 and used for a CO oxidation reaction in the CO oxidizer, and the concentration of the oxygen in the air supplied to the CO oxidizer can be increased. Therefore, the operations of the oxygen supplying device 8 can be reduced, and oxidation reactivity can also be improved.

### Embodiment 2

Next, Embodiment 2 of the present invention will be explained.

### Configuration of Hydrogen Generator 200

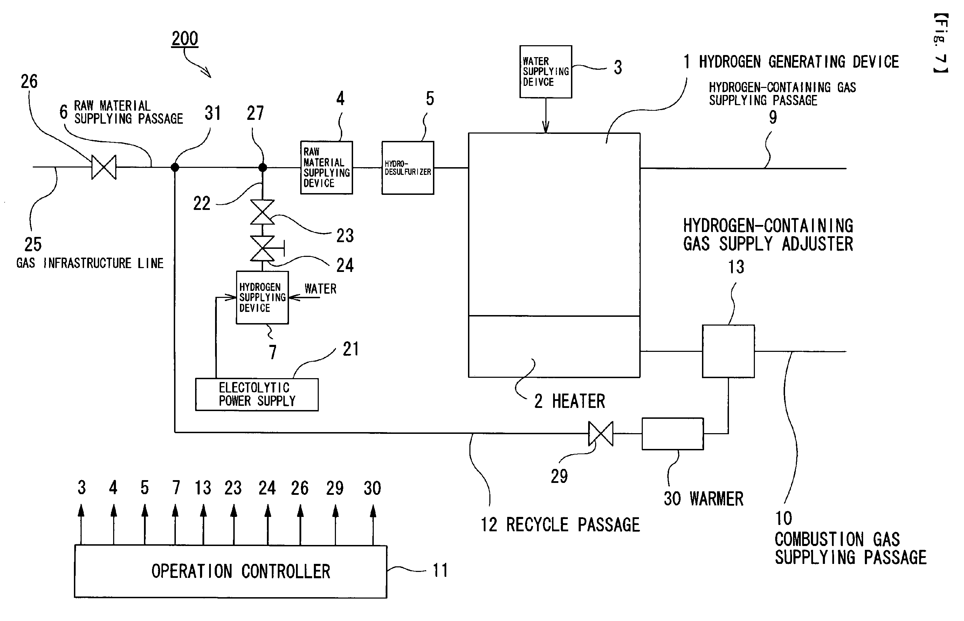

Fig. 7 is a schematic configuration diagram showing the configuration of the hydrogen generator according to Embodiment 2 of the present invention. The hydrogen generator 200 is substantially the same in configuration as the hydrogen generator 100 of Embodiment 1, so that only the differences therebetween will be explained. Major differences are as follows: a recycle passage 12 for recycling the hydrogen-containing gas generated in the hydrogen generating device 1 is formed and connected to the raw material gas supplying passage 6, so that the hydrogen containing gas can be supplied to the raw material which has not yet passed through the hydro-desulfurizer 5; and a hydrogen-containing gas supply adjuster 13 configured to adjust the amount of hydrogen-containing gas supplied to the recycle passage 12 is provided and controlled by the operation controller 11. Specifically, an upstream side of the combustion gas supplying passage 10 is connected to, for example, an exhaust port through which the hydrogen-containing gas unused in the external device is discharged or a gas passage (for example, a bypass passage 37 in Embodiment 3 (Fig. 8)) communicated with the hydrogen-containing gas supplying passage 9. The hydrogen-containing gas flows through the combustion gas supplying passage 10. An upstream end of the combustion gas supplying passage 10 may be connected to the hydrogen-containing gas supplying passage 9 via a flow divider. For example, the hydrogen-containing gas supply adjuster 13 is disposed on the combustion gas supplying passage 10. An upstream end of the recycle passage 12 is connected to the hydrogen-containing gas supply adjuster 13. A downstream end of the recycle passage 12 is connected to the raw material supplying passage 6 (connecting point 31) located upstream of the raw material supplying device 4. Moreover, an on-off valve 12 and a warmer 30 are disposed on the recycle passage 12. The on-off valve 29 opens and closes by the operation controller 11 in accordance with the supply or supply stop of the hydrogen from the recycle passage 12. The warmer 30 includes a heater (such as an electric heater) configured to heat the hydrogen-containing gas flowing through the recycle passage 12, and the heater prevents dew condensation of the hydrogen-containing gas flowing through the recycle passage 12. The operation of the warmer 30 is controlled by the operation controller 11.

### Operations of Hydrogen Generator 200

The operations of hydrogen generator 200 are substantially the same as those of the hydrogen generator 100 of Embodiment 1, so that only the differences therebetween will be explained. The differences are as below.

To be specific, during the start-up operation, the operation controller 11 closes the on-off valve 20 of the recycle passage 12 and opens the on-off valve 23 of the hydrogen supplying passage 22 to supply the hydrogen from the hydrogen supplying device 7 to the hydro-desulfurizer 5. The hydro-desulfurizer 5 carries out the desulfurization by using this hydrogen. In contrast, when the start-up operation terminates, that is, when the reforming reaction in the hydrogen generating device 1 (reformer) stabilizes and the concentration of the hydrogen in the hydrogen-containing gas stabilizes, the operation controller 11 opens the on-off valve 20 of the recycle passage 12 and closes the on-off valve of the hydrogen supplying passage 22 to supply the hydrogen through the recycle passage 12 to the hydro-desulfurizer 5. The hydro-desulfurizer 5 carries out the desulfurization by using this hydrogen.

In accordance with the hydrogen generator 200 of Embodiment 2, in a period immediately after the start-up, that is, a period in which the reforming reaction does not proceed and in a period of the start-up, that is, a period in which the temperature of the catalyst layer of the reformer is unstable, the hydrogen can be stably supplied from the hydrogen supplying device 7. Therefore, the hydro-desulfurizer 5 can remove the sulfur compound more effectively than the conventional hydrogen generator in which only the recycle passage 12 is a hydrogen supply source,. Moreover, as compared to Embodiment 1, since the hydrogen-containing gas of the combustion gas supplying passage 10 is recycled for the desulfurization after the start-up operation, it is possible to save the electric power for the electrolysis in the hydrogen generating device 7.

The warmer 30 of the recycle passage 11 may be omitted.

### Embodiment 3

Next, Embodiment 3 of the present invention will be explained.

### Configuration of Fuel Cell System 300

Fig. 8 is a schematic configuration diagram showing the configuration of a fuel cell system 300 according to Embodiment 3 of the present invention.

As shown in Fig. 8, the fuel cell system 300 includes the hydrogen generator 100 and a fuel cell 201 configured to generate electric power using as a fuel the hydrogen-containing gas supplied from the hydrogen generator 100. Since the hydrogen generator 100 is substantially the same in configuration as the hydrogen generator 100 of Embodiment 1, only the differences therebetween will be explained. The fuel cell 201 includes an oxidizing gas supplying device 202 configured to supply the oxidizing gas necessary for the electric power generation and a humidifier 203 configured to humidify the oxidizing gas such that the oxidizing gas becomes a state suitable for the electric power generation and use a porous membrane which allows the steam and oxygen to pass therethrough The oxidizing gas supplying device 202 is constituted by, for example, a blower and supplies the air as the oxidizing gas. Moreover, the fuel cell system 300 includes a cooling system 206 configured to cool down the fuel cell 201 to control the operating temperature of the fuel cell 201 and recover the heat generated when the fuel cell 201 generates the electric power. The cooling system 206 includes: a cooling water circulation passage 34 formed to extend through the fuel cell 201; a pump 205 configured to cause cooling water to circulate in the cooling water circulation passage 34; and a cooler 204 configured to release heat from the cooling water to cool down the cooling water, the cooling water having been increased in temperature by recovering exhaust heat of the fuel cell 1. The cooler 204 is constituted by a heat exchanger, a radiator, or the like. Reference sign 35a denotes a portion of the cooling water circulation passage 34, the portion extending inside the fuel cell. Since the fuel cell 201 is the same in configuration as a known fuel cell, a detailed explanation thereof is omitted. Components related to the present invention are shown by reference signs. Reference signs 32 and 33 respectively denote an oxidizing gas supplying passage and an oxidizing gas discharging passage. Reference signs 207 and 208 respectively denote a fuel gas passage and oxidizing gas passage in the fuel cell 201. In Embodiment 3, a downstream end of the hydrogen-containing gas supplying passage 9 is connected to an upstream end of the fuel gas passage 207 of the fuel cell 201, and an upstream end of the combustion gas supplying passage 10 is connected to a downstream end of the fuel gas passage 207 of the fuel cell 201. A channel switching device 35 is disposed on the hydrogen-containing gas supplying passage 9. Then, the bypass passage 37 is formed to connect the hydrogen-containing gas supplying passage 9 and the combustion gas supplying passage 10. The channel switching device 35 is configured to supply the hydrogen containing gas, flowing through the hydrogen-containing gas supplying passage 9, to the bypass passage 37 during the start-up operation of the hydrogen generator 1 and supply the hydrogen-containing gas, flowing through the hydrogen-containing gas supplying passage 9, to the fuel cell 201 after the start-up operation of the hydrogen generator 1 is terminated.

Further, the water having been supplied to the hydrogen supplying device 7 and subjected to the electrolysis is supplied to the humidifier 203. The humidifier 203 humidifies the oxidizing gas by using the supplied water.

### Operations of Fuel Cell System 300

Next, the operations of the fuel cell system 300 will be explained. The operations of the hydrogen generator 100 herein are substantially the same as those of the hydrogen generator 100 of Embodiment 1. Therefore, only the differences in the operations of the fuel cell system 300 will be explained. The hydrogen-containing gas generated in the hydrogen generator 100 is supplied to an anode electrode of the fuel cell 201 through the hydrogen gas supplying passage 9 and the fuel passage 206. Moreover, the oxidizing gas (herein, air) is supplied from the oxidizing gas supplying device 202 to a cathode electrode of the fuel cell 201. The oxidizing gas is humidified in the humidifier 203 to become a suitable state. Used as the water necessary for the humidification is the remaining water which has been supplied to the hydrogen supplying device 7 and utilized for the electrolysis. The water supplied to the hydrogen supplying device 7 can also be used as the water for humidifying the oxidizing gas, so that the configuration of the fuel cell system 300 can be simplified. Moreover, the humidifier 203 uses the porous membrane which allows the steam and oxygen to pass therethrough Therefore, the oxidizing gas is humidified in the humidifier 203, and the oxygen obtained in the hydrogen supplying device 7 can also pass through the porous membrane to the oxidizing gas side. As a result, the oxidizing gas (air) supplied to the fuel cell 201 can become richer in oxygen, so that an effect of improving the electric power generation property of the fuel cell 201 can also be expected.

### Embodiment 4

Next, Embodiment 4 of the present invention will be explained.

### Configuration of Fuel Cell System 400

Fig. 9 is a schematic configuration diagram showing the configuration of the fuel cell system 400 according to Embodiment 4 of the present invention. In Fig. 9, the fuel cell system 400 is substantially the same in configuration as the fuel cell system 300 of Embodiment 3, so that only the difference therebetween will be explained. The difference is that the cooling water used in the cooling system 206 is supplied as the water supplied to the hydrogen supplying device 7. Specifically, the channel (see Fig. 2) of the electrode 31 of the hydrogen supplying device 7 constitutes a part of the cooling water circulation passage 34 of the cooling system 206 configured to cool down the fuel cell 201. The cooling water discharged from the fuel cell 201 is supplied to the hydrogen supplying device 7, is subjected to the electrolysis, and returns to the cooler 204. Moreover, the cooler 204 is provided with the oxygen vent valve 20 configured to discharge the oxygen in the cooling water supplied from the hydrogen supplying device 7.

### Operations of Fuel Cell System 400

Next, the operations of the fuel cell system 400 will be explained. The operations of the fuel cell system 400 are substantially the same as those of the fuel cell system 300 of Embodiment 3, so that only the differences therebetween will be explained. The differences are that the water discharged from the fuel cell 201 is supplied to the hydrogen supplying device 7 and returns to the cooler 204, and the oxygen in the cooling water in the cooler 204 is discharged from the oxygen vent valve 20 during the operation. The water supplied to the hydrogen supplying device 7 can also be used as the water for adjusting the temperature of the fuel cell 201, so that the configuration of the fuel cell system 400 can be simplified.

Embodiments 1 (including Modification Examples 1 to 3) to 4 may be suitably combined.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the spirit of the present invention.

### Industrial Applicability

The present invention can be utilized for the hydrogen generator configured to generate the hydrogen containing gas from the fossil material or the like and including the hydro-desulfurizer, the method for operating the hydrogen generator, and the like.

### Reference Signs List

- 1: reformer
- 2: combustor
- 3: water supplying device
- 4: raw material supplying device
- 5: hydro-desulfurizer
- 6: raw material supplying passage
- 7: hydrogen supplying device
- 8: oxygen supplying device
- 9: hydrogen-containing gas supplying passage
- 10: combustion gas supplying passage
- 11: operation controller
- 12: recycle passage
- 13: hydrogen-containing gas supply adjuster
- 20: oxygen vent valve
- 21: electrolytic power supply
- 22: hydrogen supplying passage
- 23,29: on-off valve
- 24: flow rate control valve
- 25: gas infrastructure line
- 26: main cock
- 27, 31: connecting point
- 28: water supplying passage
- 30: warmer
- 31,32: electrode
- 33: solid polymer electrolyte membrane
- 34: cooling water circulation passage
- 35: channel switching device
- 37: bypass passage
- 100, 200: hydrogen generator
- 201: fuel cell
- 202: oxidizing gas supplying device
- 203: humidifier
- 204: cooler
- 205: pump
- 206: cooling system
- 207: fuel gas passage
- 208: oxidizing gas passage
- 300, 400: fuel cell system

## Claims

1. A hydrogen generator comprising:
a raw material supplying device configured to supply a raw material containing a sulfur constituent;
a hydrogen supplying device configured to carry out electrolysis of water to generate hydrogen;
a hydro-desulfurizer configured to remove the sulfur constituent of the raw material by using the hydrogen generated by the hydrogen supplying device, the raw material being supplied from the raw material supplying device; and
a reformer configured to generate a hydrogen-containing gas by a reforming reaction of the raw material from which the sulfur constituent is removed by the hydro-desulfurizer.

2. The hydrogen generator according to claim 1, wherein: the hydrogen supplying device receives the raw material containing the sulfur constituent; in a process of the electrolysis of the water, the hydrogen generated by the electrolysis is added to the raw material; and the raw material supplying device receives the raw material to which the hydrogen is added and supplies the raw material to the hydro-desulfurizer.

3. The hydrogen generator according to claim 1, wherein: outside the hydrogen supplying device, the hydrogen generated by the hydrogen supplying device is added to the raw material containing the sulfur constituent; and the raw material supplying device receives the raw material to which the hydrogen is added and supplies the raw material to the hydro-desulfurizer.

4. The hydrogen generator according to any one of claims 1 to 3, wherein the hydrogen supplying device is configured to carry out the electrolysis of the water by using a solid polymer membrane.

5. The hydrogen generator according to any one of claims 1 to 4, wherein: the hydrogen supplying device carries out the electrolysis of the water supplied from the water supplying device; and the water subjected to the electrolysis is supplied to the reformer.

6. The hydrogen generator according to any one of claims 1 to 5, further comprising: a CO oxidizer configured to reduce carbon monoxide in the hydrogen-containing gas generated by the reformer; and an oxygen supplying device configured to supply oxygen, generated by the electrolysis in the hydrogen supplying device, to the CO oxidizer.

7. The hydrogen generator according to claim 6, wherein the oxygen supplying device is configured to separate the oxygen, generated by the electrolysis, from the water discharged from the hydrogen supplying device and subjected to the electrolysis and supply the oxygen to the CO oxidizer.

8. The hydrogen generator according to any one of claims 1 to 7, further comprising a recycle passage through which a part of the hydrogen-containing gas generated in the reformer flows, wherein a part of the hydrogen-containing gas flowing through the recycle passage is supplied to the hydro-desulfurizer.

9. The hydrogen generator according to claim 8, wherein the recycle passage includes a warmer configured to heat a part of the hydrogen-containing gas flowing through the recycle passage.

10. The hydrogen generator according to claim 8 or 9, wherein: during a start-up operation of the hydrogen generator, the hydro-desulfurizer desulfurizes the raw material by using the hydrogen supplied from the hydrogen supplying device; and after the start-up operation, the hydro-desulfurizer desulfurizes the raw material by using a part of the hydrogen-containing gas supplied through the recycle passage.

11. A fuel cell system comprising:
the hydrogen generator according to any one of claims 1 to 10; and
a fuel cell configured to generate electric power by using as a fuel the hydrogen-containing gas supplied from the hydrogen generator.

12. The fuel cell system according to claim 11, further comprising a humidifier configured to humidify an oxidizing gas supplied to a cathode of the fuel cell, wherein
the humidifier is configured to humidify the oxidizing gas by using the water discharged from the hydrogen supplying device and subjected to the electrolysis.

13. The fuel cell system according to claim 11, further comprising a cooling system configured to cool down the fuel cell by using cooling water, wherein
the cooling system is configured such that: the cooling water is supplied to the hydrogen supplying device; the electrolysis of the cooling water is carried out in the hydrogen supplying device; and the cooling water subjected to the electrolysis flows through the fuel cell.

14. The fuel cell system according to any one of claims 11 to 13, further comprising a storage battery, wherein
electric power for the electrolysis is supplied from the storage battery to the hydrogen supplying device when the fuel cell system starts up.

15. A method for operating a hydrogen generator including: a raw material supplying device configured to supply a raw material containing a sulfur constituent; a hydrogen supplying device configured to carry out electrolysis of water to generate hydrogen; a hydro-desulfurizer configured to remove the sulfur constituent of the raw material by using the hydrogen generated by the hydrogen supplying device, the raw material being supplied from the raw material supplying device; and a reformer configured to generate a hydrogen-containing gas by a reforming reaction of the raw material from which the sulfur constituent is removed by the hydro-desulfurizer, wherein
during at least a start-up operation, the hydro-desulfurizer desulfurizes the raw material by using the hydrogen supplied from the hydrogen supplying device.

16. The method according to claim 15, wherein:
the hydrogen generator further includes a recycle passage through which a part of the hydrogen-containing gas generated in the reformer flows and is configured such that a part of the hydrogen-containing gas flowing through the recycle passage is supplied to the hydro-desulfurizer; and
during the start-up operation, the hydro-desulfurizer desulfurizes the raw material by using the hydrogen supplied from the hydrogen supplying device, and after the start-up operation, the hydro-desulfurizer desulfurizes the raw material by using a part of the hydrogen-containing gas supplied through the recycle passage.
